# EUROPEAN PATENT APPLICATION

(11) **EP 4 640 761 A1**
(43) Date of publication of application: **29.10.2025**
(21) Application number: 23906860.4
(22) Date of filing: 13.12.2023
(51) Int. Cl.: C08L 67/00, C08G 63/60, C08L 101/16

(54) **RESIN COMPOSITION AND RESIN MODIFYING AGENT**

(30) Priority: 23.12.2022 JP 2022207295
(71) Applicant: Kuraray Co., Ltd., Kurashiki-shi, Okayama 710-0801 (JP)
(72) Inventor: TAKAI, Junya, Tsukuba-shi, Ibaraki 305-0841 (JP); IMAMATSU, Masaya, Tsukuba-shi, Ibaraki 305-0841 (JP); KONISHI, Hiroyuki, Tsukuba-shi, Ibaraki 305-0841 (JP)
(74) Representative: D Young & Co LLP
(86) International application number: PCT/JP2023/044643
(87) International publication number: WO 2024/135495

(57) **Abstract**

A resin composition including a block copolymer (I) and an aliphatic polyester-based resin (II), in which the block copolymer (I) contains a block structural unit (A) having a polylactic acid unit (a) as a main component and a block structural unit (B) having a polyester unit (b) as a main component; the polyester unit (b) contains a unit derived from an aliphatic diol (b1) and an aliphatic dicarboxylic acid (b2); the aliphatic diol (b1) has an alkyl group as a branched chain and does not have a quaternary carbon atom; two hydroxy groups in the aliphatic diol (b1) are primary hydroxy groups; and the block copolymer (I) has a melting point of lower than 180°C.

## Description

### Technical Field

The present invention relates to a resin composition and a resin modifying agent having excellent biodegradability, hydrolysis resistance, heat resistance, and impact resistance.

### Background Art

From the viewpoint of environmental protection, bioplastics have been actively developed. Polylactic acid, which is a bioplastic, uses a plant-derived renewable resource such as a corn produced by photosynthesis as a raw material, and is expected to be used in a wide range of fields.

However, it is known that polylactic acid is more fragile than a petroleum-based plastic, is inferior in impact resistance, heat resistance, and the like, and further, is easily hydrolyzed. Therefore, there is a case where the use of polylactic acid as a resin material is limited. As an attempt to improve the drawbacks of polylactic acid, for example, a technique utilizing a stereocomplex of polylactic acid has been studied (see, for example, PTL 1). In addition, a technique utilizing a urethane polymer having a lactic acid unit (see, for example, PTL 2), and a technique utilizing a composition of a block copolymer obtained by copolymerizing a specific polyester and polylactic acid, and polylactic acid (see, for example, PTL 3 and PTL 4) have been studied.

### Citation List

### Patent Literature

PTL 1: JP2011-153275A
PTL 2: WO2021/210608
PTL 3: JP2014-1261A
PTL 4: JP2001-335623A

### Summary of Invention

### Technical Problem

A final product made of a resin material is required to have hydrolysis resistance in order to suppress the progress of aging deterioration. Therefore, the bioplastic needs to have both biodegradability and hydrolysis resistance depending on the application.

In addition, a final product made of a resin material is desired to have excellent impact resistance and heat resistance from the viewpoint of versatility.

Therefore, the present invention provides a resin composition having excellent biodegradability, hydrolysis resistance, heat resistance, and impact resistance, and a resin modifying agent capable of improving biodegradability, hydrolysis resistance, heat resistance, and impact resistance.

### Solution to Problem

As a result of intensive studies to solve the above problem, the present inventors arrived at the present invention described below and found that the problem can be solved.

That is, the present invention is as follows.
[1] A resin composition including a block copolymer (I) and an aliphatic polyester-based resin (II),
   in which the block copolymer (I) contains a block structural unit (A) having a polylactic acid unit (a) as a main component and a block structural unit (B) having a polyester unit (b) as a main component;
   the polyester unit (b) contains a unit derived from an aliphatic diol (b1) and an aliphatic dicarboxylic acid (b2);
   the aliphatic diol (b1) has an alkyl group as a branched chain and does not have a quaternary carbon atom;
   two hydroxy groups in the aliphatic diol (b1) are primary hydroxy groups; and
   the block copolymer (I) has a melting point of lower than 180°C.
[2] The resin composition according to Claim 1, in which the aliphatic polyester-based resin (II) is at least one selected from the group consisting of a biomass resin and a biodegradable resin.
[3] The resin composition according to [1] or [2], in which the aliphatic polyester-based resin (II) is a polylactic acid-based resin.
[4] The resin composition according to any of [1] to [3], in which the aliphatic diol (b1) has 4 or more carbon atoms.
[5] The resin composition according to any of [1] to [4], in which the aliphatic diol (b1) has 6 or more carbon atoms.
[6] The resin composition according to any of [1] to [5], in which the aliphatic diol (b1) has 30 or less carbon atoms.
[7] The resin composition according to any of [1] to [6], in which the branched chain is a methyl group.
[8] The resin composition according to any of [1] to [7], in which the aliphatic diol (b1) is 3-methyl-1,5-pentanediol.
[9] The resin composition according to any of [1] to [8], in which the aliphatic dicarboxylic acid (b2) has 4 to 12 carbon atoms.
[10] The resin composition according to any of [1] to [9], in which the aliphatic dicarboxylic acid (b2) is an acyclic aliphatic dicarboxylic acid.
[11] The resin composition according to any of [1] to [10], in which the block copolymer (I) has a glass transition point of -80°C or higher and -15°C or lower.
[12] The resin composition according to any of [1] to [11], in which the block copolymer (I) has a glass transition point of -80°C or higher and -45°C or lower.
[13] The resin composition according to any of [1] to [12], in which the block copolymer (I) has a melting point of 110°C or higher.
[14] The resin composition according to any of [1] to [13], in which the block copolymer (I) has a number average molecular weight of 20,000 to 400,000.
[15] The resin composition according to any of [1] to [14], in which the block structural unit (B) has a number average molecular weight of 10,000 to 300,000.
[16] The resin composition according to any of [1] to [15], in which the block structural unit (A) contains a structural unit derived from poly-L-lactic acid or a structural unit derived from poly-D-lactic acid.
[17] The resin composition according to any of [1] to [16], in which the block structural unit (A) is 5% by mass or more and 95% by mass or less with respect to 100% by mass of a total of the block structural unit (A) and the block structural unit (B).
[18] A resin modifying agent including a block copolymer (I) containing a block structural unit (A) having a polylactic acid unit (a) as a main component and a block structural unit (B) having a polyester unit (b) as a main component,
   in which the polyester unit (b) contains a unit derived from an aliphatic diol (b1) and an aliphatic dicarboxylic acid (b2);
   the aliphatic diol (b1) has an alkyl group as a branched chain and does not have a quaternary carbon atom; and
   two hydroxy groups in the aliphatic diol (b1) are primary hydroxy groups. Advantageous Effects of Invention

According to the present invention, it is possible to provide a resin composition having excellent biodegradability, hydrolysis resistance, heat resistance, and impact resistance, and a resin modifying agent capable of improving biodegradability, hydrolysis resistance, heat resistance, and impact resistance.

### Description of Embodiments

Hereinafter, a description is made based on an example of an embodiment of the present invention. However, the embodiments shown below are examples for embodying the technical idea of the present invention, and the present invention is not limited to the following description.

In the present description, preferable embodiments of the embodiments are shown, but a combination of two or more of the individual preferable embodiments is also a preferable embodiment. When there are several numerical value ranges for the matters indicated by the numerical value range, the lower limit value and the upper limit value thereof can be selectively combined to form a preferable embodiment. Further, when a numerical range of "XX to YY" is described, it means "XX or more and YY or less".

In the present description, "** unit" (here, "**" indicates a polymer) means "a structural unit derived from **". For example, a "polylactic acid unit" means a "structural unit derived from polylactic acid", and a "polyester unit" means a "structural unit derived from polyester".

In addition, in the present description, the "main chain" of a polymer means the longest molecular chain in the polymer molecule, unless otherwise specified.

### [Resin Composition]

The resin composition of the present embodiment includes a block copolymer (I) and an aliphatic polyester-based resin (II). Further, the block copolymer (I) contains a block structural unit (A) having a polylactic acid unit (a) as a main component and a block structural unit (B) having a polyester unit (b) as a main component, the polyester unit (b) contains a unit derived from an aliphatic diol (b1) and an aliphatic dicarboxylic acid (b2), the aliphatic diol (b1) has an alkyl group as a branched chain and does not have a quaternary carbon atom, two hydroxy groups in the aliphatic diol (b1) are primary hydroxy groups, and the block copolymer (I) has a melting point of lower than 180°C.

When the resin composition includes the block copolymer (I) having a certain structure, the resin composition is excellent in biodegradability, hydrolysis resistance, heat resistance, and impact resistance.

### <Block Copolymer (I)>

The block copolymer (I) includes a block structural unit (A) having a polylactic acid unit (a) as a main component and a block structural unit (B) having a polyester unit (b) as a main component. Further, the polyester unit (b) contains a unit derived from an aliphatic diol (b1) and an aliphatic dicarboxylic acid (b2), the aliphatic diol (b1) has an alkyl group as a branched chain and does not have a quaternary carbon atom, and two hydroxy groups of the aliphatic diol (b1) are primary hydroxy groups.

When the aliphatic diol (b1) has the above-described configuration, the resin composition has excellent hydrolysis resistance, heat resistance, and impact resistance.

In addition, by using the block copolymer (I) satisfying the above requirements, the resin composition exhibits good biodegradability. Although the reason for this is not clear, it is presumed that since the block structural unit (B) easily forms an amorphous structure, when the block copolymer (I) is biodegraded, a microorganism easily enters the polymer structure and good biodegradability is realized, whereby the resin composition also exhibits good biodegradability. In addition, it is considered that the biodegradability is further improved by the aliphatic diol (b1) having an alkyl group as a branched chain. On the other hand, in a case where the block structural unit (B) does not form an amorphous structure, it is considered that a microorganism is less likely to enter the polymer structure when the block copolymer (I) is biodegraded, and it is considered that it is difficult to obtain the effect of the present invention. However, the amorphous structure of the polymer is one factor that affects biodegradability. This is because various factors such as whether a microorganism recognizes the amorphous structure as a bait, whether an enzyme or a microorganism is easily accessible, steric hindrance of the main chain, the melting point, and the degree of crystallinity are considered to affect the biodegradability in combination. Therefore, it does not mean that good biodegradability can be obtained when the polymer has an amorphous structure.

### <<Block Structural Unit (A)>>

### <<Polylactic Acid Unit (a)>>

The block structural unit (A) has a polylactic acid unit (a) as a main component.

The "main component" means a unit having the highest content ratio among the units constituting the block structural unit (A).

The content ratio of the polylactic acid unit (a) in the block structural unit (A) is preferably 70% by mass or more, more preferably 80% by mass or more, further more preferably 85% by mass or more, and still further more preferably 90% by mass or more, and can be 100% by mass. Further, the upper limit of the polylactic acid unit (a) contained in the block structural unit (A) is not limited, and is, for example, 100% by mass or less.

The polylactic acid constituting the polylactic acid unit (a) can be prepared by a direct condensation method of lactic acid, or can be prepared by a ring-opening polymerization method of lactide.
As the lactic acid, for example, at least one selected from the group consisting of L-lactic acid, D-lactic acid, and DL-lactic acid can be used. As the lactide, for example, at least one selected from the group consisting of L-lactide, D-lactide, DL-lactide, and meso-lactide can be used.

In addition, as the polylactic acid, poly-L-lactic acid, poly-D-lactic acid, poly-DL-lactic acid, or stereocomplex polylactic acid obtained by mixing poly-L-lactic acid and poly-D-lactic acid can be used.

On the other hand, from the viewpoint of the cost and complexity of synthesis and the processability of the block copolymer (I), the polylactic acid is preferably not a stereocomplex polylactic acid.

From the viewpoint of cost and availability of raw materials, the polylactic acid is preferably at least one selected from the group consisting of poly-L-lactic acid, poly-D-lactic acid, and poly-DL-lactic acid, and more preferably at least one selected from the group consisting of poly-L-lactic acid and poly-D-lactic acid.

From the viewpoint of further excellent biodegradability and hydrolysis resistance, the block structural unit (A) contains a structural unit derived from poly-L-lactic acid or a structural unit derived from poly-D-lactic acid in an amount of preferably 70% by mass or more, more preferably 80% by mass or more, and further more preferably 90% by mass or more. For example, an example of a preferable embodiment is that the block structural unit (A) is composed of a structural unit derived from poly-L-lactic acid or a structural unit derived from poly-D-lactic acid, that is, the structural unit derived from poly-L-lactic acid or the structural unit derived from poly-D-lactic acid is 100% by mass.

### <Unit (a') Other than Polylactic Acid Unit (a)>

The block structural unit (A) can or need not contain a unit (a') other than the polylactic acid unit (a).

The monomer constituting the unit (a') is not particularly limited as long as the effect of the present invention is not impaired.

The content ratio of the unit (a') in the block structural unit (A) is preferably 30% by mass or less, more preferably 20% by mass or less, further more preferably 15% by mass or less, and still further more preferably 10% by mass or less.

### <Number Average Molecular Weight of Block Structural Unit (A)>

The number average molecular weight of the block structural unit (A) is preferably 1,000 to 200,000, more preferably 2,000 to 100,000, and further more preferably 3,000 to 50,000. Within the above numerical range, the productivity tends to be excellent. Further, from the viewpoint of heat resistance and impact resistance, the number average molecular weight of the block structural unit (A) is preferably 5,000 or more, more preferably 7,500 or more, and further more preferably 10,000 or more.

Note that when the block copolymer (I) has a plurality of block structural units (A), the number average molecular weight of the block structural unit (A) means the total of all the blocks.

The number average molecular weight of the block structural unit (A) can be determined from the number average molecular weight of the block copolymer (I) mentioned later and the mass content of the block structural unit (A).

### <<Block Structural Unit (B)>>

The block structural unit (B) has a polyester unit (b) as a main component.

The "main component" means a unit having the highest content ratio among the units constituting the block structural unit (B).

The content ratio of the polyester unit (b) in the block structural unit (B) is preferably 50% by mass or more, more preferably 70% by mass or more, further more preferably 80% by mass or more, still further more preferably 85% by mass or more, and particularly preferably 90% by mass or more, and can be 100% by mass. Further, the upper limit of the polyester unit (b) contained in the block structural unit (B) is not limited, and is, for example, 100% by mass or less.

The polyester unit (b) contains a unit derived from an aliphatic diol (b1) and an aliphatic dicarboxylic acid (b2). Specifically, the polyester unit (b) contains a unit derived from a polyester obtained by reacting an aliphatic diol (b1) with an aliphatic dicarboxylic acid (b2). The polyester unit (b) can or need not contain a unit derived from a monomer other than the aliphatic diol (b1) and the aliphatic dicarboxylic acid (b2).

The monomer other than the aliphatic diol (b1) and the aliphatic dicarboxylic acid (b2) is not particularly limited as long as the effect of the present invention is not impaired.

The total amount of the aliphatic diol (b1) and the aliphatic dicarboxylic acid (b2) in the polyester unit (b) is preferably 90% by mass or more, more preferably 95% by mass or more, and further more preferably 99% by mass or more, and can be 100% by mass. Further, the upper limit of the total amount of the aliphatic diol (b1) and the aliphatic dicarboxylic acid (b2) in the polyester unit (b) is not limited, and is, for example, 100% by mass or less.

### <Aliphatic Diol (b1)>

The aliphatic diol (b1) has an alkyl group as a branched chain and does not have a quaternary carbon atom. Further, two hydroxy groups in the aliphatic diol (b1) are primary hydroxy groups.

Here, the "branched chain" in the aliphatic diol (b1) refers to a partial structure branched from the "main chain" in the aliphatic diol (b1), and a hydroxy group is not bonded to the terminal thereof.

Further, the "main chain" in the aliphatic diol (b1) refers to a partial structure which is a molecular chain composed of a plurality of atoms, preferably carbon atoms, connecting two primary hydroxy groups in the molecule, as the two primary hydroxy groups at both ends. Therefore, two primary hydroxy groups in the aliphatic diol (b1) are located at both ends of the "main chain" in the aliphatic diol (b1).

When the aliphatic diol (b1) has a branched chain that is an alkyl group, the block structural unit (B) is less likely to be crystallized, and the hydrolysis resistance is improved. Therefore, the block copolymer (I) containing the block structural unit (B) has good biodegradability and good hydrolysis resistance. Accordingly, the resin composition containing the block copolymer (I) also has good biodegradability and good hydrolysis resistance. Further, since the block structural unit (B) is less likely to be crystallized, the block structural unit (B) contains an amorphous structure having high flexibility, and as a result, the impact resistance of the resin composition becomes good.

Further, in the aliphatic diol (b1), the number of branched chains is preferably 1 or 2, and more preferably 1. Moreover, the branched chain is preferably a methyl group, an ethyl group, or a propyl group, more preferably a methyl group or an ethyl group, and further more preferably a methyl group. In addition, when the aliphatic diol (b1) has a plurality of branched chains, the respective branched chains can be the same or different from each other.

When the aliphatic diol (b1) does not have a quaternary carbon atom, the biodegradability of the block copolymer (I) is good, and the biodegradability of the resin composition containing the block copolymer (I) is also good. In addition, it tends to react with the aliphatic dicarboxylic acid (b2), and the block copolymer (I) can be easily produced.

When the two hydroxy groups in the aliphatic diol (b1) are primary hydroxy groups, the glass transition temperature of the block copolymer (I) tends to decrease, and the impact resistance of the resin composition (particularly, the impact resistance at a low temperature of about -40°C to 10°C) is improved. In addition, it tends to react with the aliphatic dicarboxylic acid (b2), and the block copolymer (I) can be easily produced.

When the aliphatic diol (b1) has an alkyl group as a branched chain and does not have a quaternary carbon atom, and the two hydroxy groups in the aliphatic diol (b1) are primary hydroxy groups, the block copolymer (I) and the resin composition containing the block copolymer (I) have excellent biodegradability, hydrolysis resistance, and impact resistance.

The number of carbon atoms of the aliphatic diol (b1) is preferably 4 or more, more preferably 5 or more, and further more preferably 6 or more, from the viewpoint of exhibiting excellent hydrolysis resistance and impact resistance (particularly, impact resistance at a low temperature), and is preferably 30 or less, more preferably 18 or less, and further more preferably 9 or less, from the viewpoint of exhibiting even more excellent biodegradability. That is, the number of carbon atoms of the aliphatic diol (b1) is preferably 4 to 30, more preferably 5 to 18, and further more preferably 6 to 9.

Examples of the aliphatic diol (b1) include 2-methyl-1,3-propanediol, 2,2-dimethyl-1,3-propanediol, 2-ethyl-1,3-propanediol, 2-ethyl-2-methyl-1,3-propanediol, 2-methyl-1,4-butanediol, 1,2-pentanediol, 1,3-pentanediol, 2,3-pentanediol, 2,4-pentanediol, 2-methyl-2,4-pentanediol, 1,4-pentanediol, 2-methyl-1,5-pentanediol, 3-methyl-1,5-pentanediol, 2-methyl-2,4-pentanediol, 2-ethyl-1,5-pentanediol, 2,4-dimethyl-1,5-pentanediol, 2,4-diethyl-1,5-pentanediol, 1,2-hexanediol, 1,3-hexanediol, 1,4-hexanediol, 1,5-hexanediol, 2-ethyl-1,6-hexanediol, 2-methyl-1,8-octanediol, 2,7-dimethyl-1,8-octanediol, and 2-methyl-1,9-nonanediol.

The aliphatic diol (b1) is preferably at least one selected from the group consisting of 2-methyl-1,3-propanediol, 3-methyl-1,5-pentanediol, and 2,4-diethyl-1,5-pentanediol, and more preferably 3-methyl-1,5-pentanediol.

The aliphatic diol (b1) can be used alone, or in combination of two or more kinds thereof.

### <Aliphatic Dicarboxylic Acid (b2)>

The number of carbon atoms of the aliphatic dicarboxylic acid (b2) is not limited as long as the effect of the present invention is not impaired, but is preferably 4 or more, more preferably 5 or more, and further more preferably 6 or more, from the viewpoint of exhibiting excellent hydrolysis resistance and impact resistance (particularly, impact resistance at a low temperature), and is preferably 12 or less, more preferably 10 or less, and further more preferably 8 or less, from the viewpoint of exhibiting even more excellent biodegradability. That is, the number of carbon atoms of the aliphatic dicarboxylic acid (b2) is preferably 4 to 12, more preferably 5 to 10, and further more preferably 6 to 8.

The aliphatic dicarboxylic acid (b2) is preferably an acyclic aliphatic dicarboxylic acid from the viewpoint of exhibiting excellent hydrolysis resistance and impact resistance.

Examples of the aliphatic dicarboxylic acid (b2) include succinic acid, glutaric acid, adipic acid, pimelic acid, suberic acid, azelaic acid, sebacic acid, undecanedioic acid, and decanedicarboxylic acid. At least one selected from the group consisting of succinic acid, adipic acid, and sebacic acid is preferable, at least one selected from the group consisting of succinic acid and adipic acid is more preferable, and adipic acid is further more preferable.

The aliphatic dicarboxylic acid (b2) can be used alone or in combination of two or more kinds thereof.

### <Preferable Combination of Aliphatic Diol (b1) and Aliphatic Dicarboxylic Acid (b2)>

From the viewpoint of exhibiting even more excellent biodegradability, hydrolysis resistance, and impact resistance, a combination of 3-methyl-1,5-pentanediol and adipic acid, a combination of 3-methyl-1,5-pentanediol and succinic acid, a combination of 2-methyl-1,3-propanediol and adipic acid, a combination of 2-methyl-1,3-propanediol and succinic acid, and a combination of 2,4-diethyl-1,5-pentanediol and adipic acid are examples of preferable embodiments, and a combination of 3-methyl-1,5-pentanediol and adipic acid is an example of a more preferable embodiment.

### <Ratio of Aliphatic Diol (b1) and Aliphatic Dicarboxylic Acid (b2)>

When the aliphatic diol (b1) and the aliphatic dicarboxylic acid (b2) are reacted, the charged molar ratio [aliphatic diol (b1)/aliphatic dicarboxylic acid (b2)] is preferably 1.4/1 to 1/1.4, and more preferably 1.2/1 to 1/1.2.

### <Unit (b') Other than Polyester Unit (b)>

The block structural unit (B) can contain a unit(b') other than the polyester unit (b).

The monomer constituting the unit (b') is not particularly limited as long as the effect of the present invention is not impaired.

The content ratio of the unit (b') in the block structural unit (B) is preferably 50% by mass or less, more preferably 30% by mass or less, further more preferably 20% by mass or less, still further more preferably 15% by mass or less, and particularly preferably 10% by mass or less.

### <Number Average Molecular Weight of Block Structural Unit (B)>

The number average molecular weight of the block structural unit (B) can be preferably 1,000 to 300,000, more preferably 5,000 to 200,000, further more preferably 7,000 to 150,000, and still further more preferably 9,000 to 100,000. Within the above numerical range, the block copolymer (I) tends to be easily produced.

Further, from the viewpoint of heat resistance and impact resistance, the number average molecular weight of the block structural unit (B) is preferably 10,000 or more, more preferably 15,000 or more, further more preferably 20,000 or more, and still further more preferably 25,000 or more. That is, from the viewpoint of heat resistance and impact resistance, the number average molecular weight of the block structural unit (B) is preferably 10,000 to 300,000, more preferably 15,000 to 200,000, further more preferably 20,000 to 150,000, and still further more preferably 25,000 to 100,000.

The number average molecular weight of the block structural unit (B) can be determined from the number average molecular weight of the block copolymer (I) mentioned later and the mass content of the block structural unit (B), and specifically, can be measured by the method described in Examples.

### <<Structural Unit Ratio of Block Copolymer (I)>>

The block structural unit (A) is preferably 5% by mass or more and 95% by mass or less with respect to 100% by mass of the total of the block structural unit (A) and the block structural unit (B).

When the ratio of the block structural unit (A) is 5% by mass or more, the heat resistance of the resin composition tends to be even more improved. In addition, when the ratio of the block structural unit (A) is 95% by mass or less, the hydrolysis resistance, impact resistance, and biodegradability of the resin composition tend to be even more improved.

From the viewpoint of heat resistance, the ratio of the block structural unit (A) is more preferably 10% by mass or more, further more preferably 15% by mass or more. Further, from the viewpoints of hydrolysis resistance, impact resistance, biodegradability, and the like, the ratio of the block structural unit (A) is more preferably 80% by mass or less, further more preferably 75% by mass or less, still further more preferably 70% by mass or less, particularly preferably 60% by mass or less, extremely preferably 50% by mass or less, and most preferably 45% by mass or less.

The ratio of the block structural unit (A) can be determined by ¹H-NMR, and specifically, can be measured by the method described in Examples.

In addition, the total content ratio of the block structural unit (A) and the block structural unit (B) in the block copolymer (I) is preferably 90% by mass or more, more preferably 95% by mass or more, and can be 100% by mass. In addition, the upper limit of the total content ratio of the block structural unit (A) and the block structural unit (B) in the block copolymer (I) is not limited, and is, for example, 100% by mass or less.

The block copolymer (I) can or need not contain a unit other than the block structural unit (A) and the block structural unit (B).

The unit other than the block structural unit (A) and the block structural unit (B) is not particularly limited as long as the effect of the present invention is not impaired.

The content ratio of the unit other than the block structural unit (A) and the block structural unit (B) in the block copolymer (I) is preferably 10% by mass or less, and more preferably 5% by mass or less.

### <<Bonding Form of Block Copolymer (I)>>

The bonding form of the block copolymer (I) is preferably a triblock type or a diblock type, and more preferably a triblock type. The block copolymer (I) can be a mixture of a triblock type and a diblock type. Specifically, the bonding form is preferably [block structural unit (A)] - [block structural unit (B)] - [block structural unit (A)].

### <<Number Average Molecular Weight of Block Copolymer (I)>>

From the viewpoint of hydrolysis resistance, impact resistance, and heat resistance, the number average molecular weight of the block copolymer (I) is preferably 5,000 or more, more preferably 10,000 or more, and further more preferably 15,000 or more, and from the viewpoint of ease of production and processability, the number average molecular weight of the block copolymer (I) is preferably 400,000 or less, more preferably 200,000 or less, and further more preferably 100,000 or less. That is, the number average molecular weight of the block copolymer (I) is preferably 5,000 to 400,000, more preferably 10,000 to 200,000, and further more preferably 15,000 to 100,000.

Further, from the viewpoint of heat resistance and impact resistance, the number average molecular weight of the block copolymer (I) is preferably 20,000 or more, more preferably 25,000 or more, further more preferably 30,000 or more, and still further more preferably 35,000 or more. From the viewpoint of heat resistance, impact resistance, ease of production, and processability, the number average molecular weight of the block copolymer (I) is preferably 20,000 to 400,000, more preferably 25,000 to 200,000, and further more preferably 30,000 to 100,000.

The number average molecular weight of the block copolymer (I) can be determined by gel permeation chromatography (GPC), and specifically, can be measured by a method described in Examples.

### <<Melting Point of Block Copolymer (I)>>

From the viewpoint of processability such as ease of melt processing, the melting point of the block copolymer (I) is lower than 180°C, preferably 175°C or lower, more preferably 170°C or lower, and further more preferably 160°C or lower.

From the viewpoint of practical heat resistance, the melting point of the block copolymer (I) is preferably 110°C or higher, more preferably 120°C or higher, and further more preferably 125°C or higher.

From the viewpoint of good processability and heat resistance, the melting point of the block copolymer (I) is preferably 110°C or higher and lower than 180°C, more preferably 120°C or higher and 175°C or lower, further more preferably 120°C or higher and 170°C or lower, and still further more preferably 125°C or higher and 160°C or lower.

The melting point of the block copolymer (I) can be determined by a differential scanning calorimeter, and specifically, can be measured by a method described in Examples.

### <<Glass Transition Temperature of Block Copolymer (I)>>

The glass transition temperature of the block copolymer (I) is preferably -80°C or higher and -15°C or lower. Within the above numerical range, the resin composition tends to be excellent in flexibility and impact resistance.

From the viewpoint of low temperature properties such as impact resistance at a low temperature, the glass transition temperature of the block copolymer (I) is more preferably - 20°C or lower, further more preferably -25°C or lower, and in one embodiment of the present invention, can be -30°C or lower, or can be -35°C or lower.
Further, in another embodiment of the present invention, the glass transition temperature of the block copolymer (I) can be -45°C or lower.

The lower limit value of the glass transition temperature of the block copolymer (I) is preferably lower, but in one embodiment of the present invention, can be, for example, -70°C or higher, -60°C or higher, -50°C or higher, or -40°C or higher.
Further, in another embodiment of the present invention, the glass transition temperature of the block copolymer (I) can be -70°C or higher, -60°C or higher, or -50°C or higher.

The glass transition temperature of the block copolymer (I) can be determined by differential scanning calorimetry.

### <Method for Producing Block Copolymer (I)>

As a method for producing the block copolymer (I), a known production method can be adopted.

The known method for producing the block copolymer (I) can be, for example, a method in which a polyester constituting the polyester unit (b) is synthesized, and the polyester and lactide are subjected to a polymerization reaction.

The polyester can be synthesized by a known method. For example, the polyester can be synthesized by reacting an aliphatic diol (b1) with an aliphatic dicarboxylic acid (b2) using an esterifying catalyst (for example, tin octylate, tin chloride, or tin oxide).

When the polyester and the lactide are subjected to a polymerization reaction, a ring-opening polymerization catalyst (for example, tin octylate, tin chloride, or tin oxide) is preferably used. Examples of the polymerization reaction include solution polymerization, melt polymerization, and interfacial polycondensation, and known polymerization reaction conditions can be set for any of these.

In addition, another known method for producing the block copolymer (I) can be, for example, a method in which a polylactic acid constituting the polylactic acid unit (a) and a polyester constituting the polyester unit (b) are separately synthesized, and the polylactic acid and the polyester are reacted with each other.

The polylactic acid can be synthesized by a known method. For example, lactic acid can be reacted by a direct condensation method to synthesize polylactic acid, or lactide can be reacted by a ring-opening polymerization method to synthesize polylactic acid.

When the polylactic acid and the polyester are subjected to a polymerization reaction, an esterification catalyst (for example, tin octylate, tin chloride, or tin oxide) is preferably used. Examples of the polymerization reaction include solution polymerization, melt polymerization, and interfacial polycondensation, and known polymerization reaction conditions can be set for any of these.

### <Aliphatic Polyester-based Resin (II)>

In the present embodiment, the aliphatic polyester-based resin (II) is preferably at least one selected from the group consisting of a biomass resin and a biodegradable resin from the viewpoint of biodegradability.

Examples of the aliphatic polyester-based resin (II) include polylactic acid (PLA), polycaprolactone (PCL), poly (caprolactone / butylene succinate) (PCLBS), polybutylene succinate (PBS), poly (butylene succinate / adipate) (PBSA), poly (butylene succinate / carbonate) (PEC), poly (ethylene terephthalate / succinate) (PETS), poly (butylene adipate / terephthalate) (PBAT), poly (tetramethylene adipate / terephthalate) (PTMT), polyethylene succinate (PES), polyglycolic acid (PGA), polyethylene furanoate (PEF), polyhydroxyalkanoate (PHA) [for example, polyhydroxybutyrate (PHB), polyhydroxybutyrate valerate (PHBV), and the like], and copolymers containing these.

The aliphatic polyester-based resin (II) can be used alone or in combination of two or more kinds thereof.

The aliphatic polyester-based resin (II) is preferably PLA, PBS, PBSA, or PBAT, and more preferably PLA and a copolymer thereof, that is, a polylactic acid-based resin, from the viewpoint of exhibiting even more excellent hydrolysis resistance, heat resistance, impact resistance, and biodegradability.

When a polylactic acid-based resin is used as the aliphatic polyester-based resin (II), examples of the polylactic acid-based resin include at least one selected from the group consisting of a homopolymer of L-lactic acid, a homopolymer of D-lactic acid, a copolymer of L-lactic acid and D-lactic acid, a homopolymer of DL-lactic acid, a copolymer of DL-lactic acid and L-lactic acid, a copolymer of DL-lactic acid and D-lactic acid, and a polymer of lactide which is a cyclic dimer of lactic acid.

Further, the polylactic acid-based resin can be a copolymer of lactic acid and an aliphatic hydroxycarboxylic acid other than lactic acid, an aliphatic dicarboxylic acid, an aliphatic diol, an aromatic dicarboxylic acid, or the like. The copolymer preferably contains a structural unit derived from lactic acid in an amount of 70 mol% or more, more preferably 80 mol% or more, and further more preferably 90 mol% or more.

Among these, as the polylactic acid-based resin, a homopolymer of L-lactic acid, a homopolymer of D-lactic acid, or a copolymer of L-lactic acid and D-lactic acid is preferable, and a homopolymer of L-lactic acid is more preferable.

The polylactic acid-based resin can be used alone or in combination of two or more kinds thereof.

A commercially available product can be used as the polylactic acid-based resin. Examples of commercially available products include "INGEO series" (trade name) manufactured by NatureWorks, LLC., "Luminy series" (trade name) manufactured by TOTAL CORBION, "Revode" series manufactured by Zhejiang Hisun Biomaterials Co., Ltd., and "SUPLA" (trade name) manufactured by SUPLA Material Technology Co., Ltd.

The weight-average molecular weight of the polylactic acid-based resin is preferably 50,000 or more, more preferably 100,000 or more, and further more preferably 150,000 or more, from the viewpoint of impact resistance and heat resistance, and is preferably 600,000 or less, more preferably 550,000 or less, and further more preferably 500,000 or less from the viewpoint of molding processability and compatibility with the block copolymer (I). That is, the weight-average molecular weight of the polylactic acid-based resin is preferably 50,000 to 600,000, more preferably 100,000 to 550,000, and further more preferably 150,000 to 500,000.

The weight average molecular weight of the polylactic acid-based resin can be determined by gel permeation chromatography (GPC) measurement in terms of standard polystyrene. Further, when a commercially available product is used, a catalog value can be adopted.

### <Content Ratio>

The resin composition of the present embodiment contains the block copolymer (I) in an amount of preferably 0.5 to 50% by mass, more preferably 1 to 40% by mass, further more preferably 1.5 to 30% by mass, and still further more preferably 2 to 20% by mass, with respect to 100% by mass of the total of the block copolymer (I) and the aliphatic polyester-based resin (II). When the content ratio is as described above, the resin composition can be even more excellent in hydrolysis resistance, heat resistance, and impact resistance.

The resin composition of the present embodiment contains the aliphatic polyester-based resin (II) in an amount of preferably 50 to 99.5% by mass, more preferably 60 to 99% by mass, further more preferably 70 to 98.5% by mass, and still further more preferably 80 to 98% by mass, with respect to 100% by mass of the total of the block copolymer (I) and the aliphatic polyester-based resin (II). When the content ratio is as described above, the resin composition can be even more excellent in hydrolysis resistance, heat resistance, and impact resistance.

The resin composition of the present embodiment contains the block structural unit (A) in an amount of preferably 0.1 to 40% by mass, more preferably 0.3 to 30% by mass, further more preferably 0.5 to 25% by mass, and still further more preferably 1 to 15% by mass, with respect to 100% by mass of the total of the block copolymer (I) and the aliphatic polyester-based resin (II). When the content ratio is as described above, the resin composition can be even more excellent in hydrolysis resistance, heat resistance, and impact resistance.

The resin composition of the present embodiment contains the block structural unit (B) in an amount of preferably 0.2 to 40% by mass, more preferably 0.5 to 30% by mass, further more preferably 1 to 20% by mass, and still further more preferably 1.5 to 15% by mass, with respect to 100% by mass of total of the block copolymer (I) and the aliphatic polyester-based resin (II). When the content ratio is as described above, the resin composition can be even more excellent in hydrolysis resistance, heat resistance, and impact resistance.

The total content ratio of the block copolymer (I) and the aliphatic polyester-based resin (II) in the resin composition of the present embodiment is preferably 80% by mass or more, more preferably 85% by mass or more, further more preferably 90% by mass or more, still further more preferably 95% by mass or more, and still further more preferably 98% by mass or more. The total content ratio of the block copolymer (I) and the aliphatic polyester-based resin (II) in the resin composition of the present embodiment can be 100% by mass or less. When the content ratio is as described above, the effect of the present invention is more remarkably exhibited.

### <Other Components>

The resin composition of the present embodiment can contain a plasticizer, a resin other than the aliphatic polyester-based resin (II), and other additives in addition to the block copolymer (I) and the aliphatic polyester-based resin (II).

### <Plasticizer>

A plasticizer can be contained for the purpose of adjusting the viscosity of the resin composition to a viscosity suitable for molding or for the purpose of obtaining a molded product having a desired hardness.
The plasticizer is not particularly limited, but is preferably a plasticizer having biodegradability in any environment of industrial compost, household compost, soil, and the sea. Suitable examples include plant ester such as rapeseed oil and castor oil, synthetic ester such as triacetin, diethyl phthalate and triethyl citrate, polyol such as ethylene glycol and trimethylolpropane and a derivative thereof, and sugar such as sorbitol. These can be used alone or in combination of two or more thereof.

### <Resin Other than Aliphatic Polyester-Based Resin (II)>

The resin other than the aliphatic polyester-based resin (II) is not particularly limited, but is preferably a resin having biodegradability in any environment of industrial compost, household compost, soil, and the sea. Suitable examples thereof include polyvinyl alcohol, a cellulose resin such as cellulose acetate, starch and an esterified product thereof, and 4-nylon. These can be used alone or in combination of two or more thereof.

### <Additive>

The resin composition of the present embodiment can contain an additive other than the block copolymer (I) and the aliphatic polyester-based resin (II).

Examples of the additive include an inorganic filler, a softening agent, a heat aging inhibitor, an antioxidant, a hydrolysis inhibitor, a light stabilizer, an antistatic agent, a mold release agent, a flame retardant, a foaming agent, a pigment, a dye, a whitening agent, an ultraviolet absorber, and a lubricant. These can be used alone or in combination of two or more thereof.

When the additive is used, the content of the additive in the resin composition can be appropriately determined depending on the desired physical properties of the resin composition.

### [Method for Producing Resin Composition]

The method for producing the resin composition of the present embodiment is not particularly limited, and the block copolymer (I), the aliphatic polyester-based resin (II), and the additive as necessary can be uniformly mixed.

Examples of the mixing method include a method of melt-kneading using a single-screw extruder, a multi-screw extruder, a Banbury mixer, a heating roll, a Brabender, various kneaders, or the like, or a method of melt-kneading by supplying each component from a separate charging port.

In addition, they can be preblended before melt-kneading. Examples of the preblending method include a method using a mixer such as a Henschel mixer, a high-speed mixer, a V-blender, a ribbon blender, a tumbler blender, or a conical blender. The temperature during melt-kneading can be arbitrarily selected preferably in the range of 140 to 220°C in consideration of the melting points and decomposition temperatures of the block copolymer (I) and the aliphatic polyester-based resin (II).

### [Resin Modifying Agent]

When the block copolymer (I) is mixed with the aliphatic polyester-based resin (II) to form a resin composition, hydrolysis resistance, heat resistance, and impact resistance can be improved.
Accordingly, the present invention provides a resin modifying agent including the block copolymer (I).

Further, in a suitable embodiment, the use of the block copolymer (I) as a resin modifying agent for the aliphatic polyester-based resin (II) can be mentioned.

### Examples

Hereinafter, the present invention is specifically described with reference to Examples and Comparative Examples, but the present invention is not limited thereto.

The compounds used in Examples and Comparative Examples are as follows.
3-methyl-1,5-pentanediol (manufactured by Kuraray Co., Ltd.)
Adipic acid (manufactured by Tokyo Chemical Industry Co., Ltd.)
Tin octylate (manufactured by Tokyo Chemical Industry Co., Ltd.)
Toluene (manufactured by Kishida Chemical Co., Ltd.
   L-lactide (manufactured by Tokyo Chemical Industry Co., Ltd.)
D-lactide (manufactured by Tokyo Chemical Industry Co., Ltd.)
Methanol (manufactured by FUJIFILM Wako Pure Chemical Corporation)
Succinic acid (manufactured by Tokyo Chemical Industry Co., Ltd.)
2-methyl-1,3-propanediol (manufactured by Tokyo Chemical Industry Co., Ltd.)
2,4-diethyl-1,5-pentanediol (manufactured by Tokyo Chemical Industry Co., Ltd.)
Propylene glycol (manufactured by FUJIFILM Wako Pure Chemical Corporation)

The physical properties of the block copolymer in the resin composition, the polymer, and the resin composition in Examples and Comparative Examples were measured or evaluated by the following methods.

### (1) Number Average Molecular Weight (Mn)

The number average molecular weight (Mn) of the block copolymer and the polymer was determined in terms of standard polystyrene by gel permeation chromatography (GPC). In addition, the Mn of the block structural unit (B) was determined from the Mn of the block copolymer and the mass content of the block structural unit (B), and the Mn of the block structural unit (B') was determined from the Mn of the block copolymer and the mass content of the block structural unit (B').

### <Measurement Conditions of GPC>

Apparatus: GPC apparatus "HLC-8220" manufactured by Tosoh Corporation
Separation column: "TSKgel SuperMultiporeHZ-M" manufactured by Tosoh Corporation (column diameter = 4.6 mm, column length = 15 cm) "(two columns connected in series were used)
Eluent: tetrahydrofuran (THF)
Eluent flow rate: 0.35 mL/minute
Column temperature: 40°C
Detection method: differential refractive index (RI)
Injection amount: 10 µL
Concentration: 1 mg/1 mL (block copolymer/THF)

### (2) Hard Ratio (% by Mass) (Mass Content of Block Structural Unit (A) Having Polylactic Acid Unit (a) as Main Component)

The hard ratios of the block copolymer and polymer were calculated by ¹H-NMR. The molar ratio of the block structural unit (A) and the block structural unit (B) was calculated from the area ratio of the signal near 5.2 ppm derived from the polylactic acid unit and the signal near 0.9 ppm derived from the structural unit (B) having the polyester unit (b) as a main component in the obtained spectrum, or the molar ratio of the block structural unit (A) and the block structural unit (B') was calculated from the area ratio of the signal near 5.2 ppm derived from the polylactic acid unit and the signal near 0.9 ppm derived from the structural unit (B') having the polyester unit (b') as a main component in the obtained spectrum. The molar ratio was multiplied by the molecular weight of the block structural unit to obtain a mass ratio, and the mass ratio of the block structural unit (A) when the total of the mass ratios was adjusted to 100 was defined as the hard ratio.

### <Measurement Conditions of ¹H-NMR>

Apparatus: nuclear magnetic resonance apparatus "JNM-ECX400" manufactured by JEOL Ltd.
Solvent: deuterated chloroform
Measurement temperature: 50°C
Accumulated number of times: 1024 times
Rate of temperature increase: 10°C/min

### (3) Melting Point (°C)

The melting points of the block copolymer and polymer were measured by the method described in JIS K7121:2012 with a differential scanning calorimeter. When a plurality of peaks were observed, the melting point derived from the peak on the highest temperature side was defined as the melting point of the block copolymer.
Apparatus: differential scanning calorimetry analyzing apparatus "DSC822" manufactured by Mettler Toledo
Measurement condition: rate of temperature increase of 10°C/min

### (4) Glass Transition Temperature (°C)

The glass transition temperatures of the block copolymer and the resin composition were measured by the method described in JIS K7121:2012 with a differential scanning calorimeter.
Apparatus: differential scanning calorimetry analyzing apparatus "DSC822" manufactured by Mettler Toledo
Measurement condition: rate of temperature increase of 10°C/min

### (5) Biodegradability of Resin Composition (Compost)

The biodegradability of the resin composition in compost was measured according to a method based on ISO 14855-2:2018. When the decomposition rate after 15 days was 10% by mass or more, it was evaluated as A, and when it was less than 10% by mass, it was evaluated as B.

### (6) Impact Strength (kJ/m²)

### <Preparation of Test Piece for Impact Strength Measurement>

Using a depressurization heat press apparatus ("IMC-183B" manufactured by Imoto Machinery Co., LTD.), the pressure was reduced to -0.1 MPaG using an oil rotary pump, and the resin composition was preheated at 200°C for 5 minutes and then pressed at a 50 kN for 3 minutes. Thereafter, pressing was performed for 3 minutes at 70 kgf/cm² in a cold press apparatus equipped with water flow cooling to prepare a press plate having a thickness of 3.0 mm. A strip piece of 80×10 mm was cut out from the obtained press plate and crystallized in a thermostatic bath at 110°C for 3 hours. V-notch processing (remaining width of 8 mm and tip radius of 0.25 mm) was performed on the central part of the longitudinal side to prepare a notched strip test piece.

### < Measurement of Impact Strength>

The notched strip test piece prepared using the resin composition was stored at 23°C and under a humidity of 49% for 24 hours or more, and the impact strength was measured at 23°C and a humidity of 49% with a hammer load of 2 J using a Charpy impact resistance tester ("DG-CB" manufactured by Toyo Seiki Seisaku-sho, Ltd.). The five times average value was adopted as the measurement value.

### (7) Haze (%)

Using a depressurization heat press apparatus ("IMC-183B" manufactured by Imoto Machinery Co., LTD.), the pressure was reduced to -0.1 MPaG using an oil rotary pump, and the resin composition was preheated at 200°C for 5 minutes and then pressed at a 40 kN for 1 minute. Thereafter, pressing was performed for 1 minute at 20 kgf/cm² in a cold press apparatus equipped with water flow cooling to prepare a press plate having a thickness of 0.125 mm. A square piece of 50×50 mm was cut out from the obtained press plate. The haze of the test piece was measured by a method in accordance with JIS-K7136 using "Spectral Haze Meter SH7000" (manufactured by Nippon Denshoku Industries Co., Ltd., light source D65).

### (8) Deflection Temperature under Load (°C)

### <Preparation of Test Piece for Deflection Temperature under Load>

Using a depressurization heat press apparatus ("IMC-183B" manufactured by Imoto Machinery Co., LTD.), the pressure was reduced to -0.1 MPaG using an oil rotary pump, and the resin composition was preheated at 200°C for 5 minutes and then pressed at a 50 kN for 3 minutes. Thereafter, pressing was performed for 3 minutes at 70 kgf/cm² in a cold press apparatus equipped with water flow cooling to prepare a press plate having a thickness of 3.0 mm. A strip piece of 80×10 mm was cut out from the obtained press plate, and crystallized in a thermostatic bath at 110°C for 3 hours to prepare a strip test piece.

### <Measurement of Deflection Temperature under Load>

The strip test piece prepared using the resin composition was stored at 23°C and under a humidity of 49% for 24 hours or more, and the deflection temperature under load was measured using a deflection temperature under load tester ("S-3M" manufactured by Toyo Seiki Seisaku-sho, Ltd.) in a flatwise manner under a load of 0.45 MPa. The three times average value was adopted as the measurement value.

### (9) Hydrolysis Resistance

### <Preparation of Test Piece for Hydrolysis Resistance>

A test piece for hydrolysis resistance (strip test piece) was prepared by the same method as the method described in the above <Preparation of Test Piece for Deflection Temperature under Load>.

### <Test for Hydrolysis Resistance>

Using the strip test piece prepared using the resin composition, the deflection temperature under load (1) was measured by the same method as the method described in the above <Measurement of Deflection Temperature under Load>.

Next, a test piece prepared by the same method as the method of the strip test piece for which the deflection temperature under load (1) was measured was immersed in 100 mL of ion-exchanged water having pH 7, allowed to stand at 50°C for 1 week, then taken out, stored at 23°C and under a humidity of 49% for 24 hours or more, and then the deflection temperature under load (2) was measured using the strip test piece by the same method as the above

### <Measurement of Deflection Temperature under Load>.

When the difference between the deflection temperature under load (1) and the deflection temperature under load (2) was less than 5°C, it was evaluated as A, and when it was 5°C or more, it was evaluated as B.

### [Production Example 1]

Into a flask equipped with a device capable of distilling off a generated liquid and a vacuum pump, 3-methyl-1,5-pentanediol and adipic acid were charged such that the molar ratio was 3-methyl-1,5-pentanediol/adipic acid = 1.1/1, tin octylate was further added so as to be 0.1% by mass with respect to the total weight of 3-methyl-1,5-pentanediol and adipic acid, and the mixture was subjected to 3 h of heating at 160°C and 3 h of heating at 220°C under a nitrogen gas atmosphere at normal pressure to perform a reaction while distilling off water. Next, the pressure was reduced to 2,000 Pa to perform a 3 h of reaction, and then the pressure was reduced to 80 Pa to perform a reaction while appropriately checking until the number average molecular weight reached 9,500, thereby synthesizing a polymer composed of a structural unit (B') having a polyester unit as a main component. After completion of the reaction, the pressure was returned to normal pressure, the temperature was cooled to 80°C, toluene was added to dilute the solid content concentration to 40% by mass, and then the toluene solution was charged into methanol in an amount twice the total amount of the solution. The supernatant was discarded, methanol in the same amount as the amount of the toluene solution charged was added again, and washing was performed. The supernatant was discarded, and the collected insoluble content was dried in a vacuum dryer at 40°C to remove the organic volatile content, thereby obtaining a polymer composed of a structural unit (B') having a polyester unit as a main component.

Toluene was added again to the purified polymer composed of the structural unit (B') to dilute it such that the solid content concentration was 33% by mass, and then the temperature was raised to 140°C to distill off 10% by mass of the weight of the added toluene to dehydrate the inside of the system.

Thereafter, the mixture was cooled to 80°C, the polymer composed of the structural unit (B') and L-lactide were added such that a mass ratio was the polymer composed of the structural unit (B')/L-lactide = 50/50, and toluene was further added in an amount corresponding to the above-mentioned distilled weight to adjust the solid content concentration to 50% by mass. Thereafter, when the temperature was raised to 100°C, tin octylate was added in an amount of 0.1% by mass with respect to the polymer composed of the structural unit (B'), and a 4 h of reaction was performed to obtain a toluene solution of the block copolymer composed of a block structural unit (A) having a polylactic acid unit (a) as a main component and a block structural unit (B) having a polyester unit (b) as a main component.

Toluene was added to this solution to dilute the solid content concentration to 40% by mass, and then the toluene solution was charged into methanol in an amount twice the total amount of the solution to precipitate a solid. The supernatant methanol was discarded, methanol in the same amount as the amount of the toluene solution charged was added again, and washing was performed. The methanol was discarded, and the collected solid was dried at 40°C in a vacuum dryer to remove the organic volatile content, thereby obtaining a block copolymer (I-1) composed of a block structural unit (A) having a polylactic acid unit (a) as a main component and a block structural unit (B) having a polyester unit (b) as a main component.

The obtained block copolymer (I-1) was subjected to the above measurement. The results are shown in Table 1-1.

### [Production Example 2]

A block copolymer (I-2) composed of a block structural unit (A) having a polylactic acid unit (a) as a main unit and a block structural unit (B) having a polyester unit (b) as a main unit was synthesized in the same manner as in Production Example 1 except that the number average molecular weight was adjusted by adjusting the reaction time during the synthesis of the polymer composed of a structural unit (B') having a polyester unit (b) as a main unit, the mass ratio of L-lactide used was changed, and the dilution concentration during the synthesis was appropriately changed to a concentration that was easy to handle.

The obtained block copolymer (I-2) was subjected to the above measurement. The results are shown in Table 1-1.

### [Production Example 3]

A block copolymer (I-3) composed of a block structural unit (A) having a polylactic acid unit (a) as a main unit and a block structural unit (B) having a polyester unit (b) as a main unit was synthesized in the same manner as in Production Example 1 except that succinic acid was used instead of adipic acid, the number average molecular weight was adjusted by adjusting the reaction time during the synthesis of the polymer composed of the structural unit (B') having a polyester unit as a main unit, the mass ratio of L-lactide used was changed, and the dilution concentration during the synthesis was appropriately changed to a concentration that was easy to handle.

The obtained block copolymer (I-3) was subjected to the above measurement. The results are shown in Table 1-1.

### [Production Example 4]

A block copolymer (I-4) composed of a block structural unit (A) having a polylactic acid unit (a) as a main unit and a block structural unit (B) having a polyester unit (b) as a main unit was synthesized in the same manner as in Production Example 1 except that 2-methyl-1,3-propanediol was used instead of 3-methyl-1,5-pentanediol, the number average molecular weight was adjusted by adjusting the reaction time during the synthesis of the polymer composed of the structural unit (B') having a polyester unit as a main unit, the mass ratio of L-lactide used was changed, and the dilution concentration during the synthesis was appropriately changed to a concentration that was easy to handle.

The obtained block copolymer (I-4) was subjected to the above measurement. The results are shown in Table 1-1.

### [Production Example 5]

A block copolymer (I-5) composed of a block structural unit (A) having a polylactic acid unit (a) as a main unit and a block structural unit (B) having a polyester unit (b) as a main unit was synthesized in the same manner as in Production Example 1 except that 2-methyl-1,3-propanediol was used instead of 3-methyl-1,5-pentanediol, succinic acid was used instead of adipic acid, the number average molecular weight was adjusted by adjusting the reaction time during the synthesis of the polymer composed of the structural unit (B') having a polyester unit as a main unit, the mass ratio of L-lactide used was changed, and the dilution concentration during the synthesis was appropriately changed to a concentration that was easy to handle.

The obtained block copolymer (I-5) was subjected to the above measurement. The results are shown in Table 1-1.

### [Production Example 6]

A block copolymer (I-6) composed of a block structural unit (A) having a polylactic acid unit (a) as a main unit and a block structural unit (B) having a polyester unit (b) as a main unit was synthesized in the same manner as in Production Example 1 except that 2,4-diethyl-1,5-pentanediol was used instead of 3-methyl-1,5-pentanediol, the number average molecular weight was adjusted by adjusting the reaction time during the synthesis of the polymer composed of the structural unit (B') having a polyester unit as a main unit, the mass ratio of L-lactide used was changed, and the dilution concentration during the synthesis was appropriately changed to a concentration that was easy to handle.

The obtained block copolymer (I-6) was subjected to the above measurement. The results are shown in Table 1-1.

### [Production Examples 7 to 14]

Block copolymers (I-7) to (I-14) each composed of a block structural unit (A) having a polylactic acid unit (a) as a main unit and a block structural unit (B) having a polyester unit (b) as a main unit were synthesized in the same manner as in Production Example 1 except that the number average molecular weight was adjusted by adjusting the reaction time during the synthesis of the polymer composed of a structural unit (B') having a polyester unit (b) as a main unit, the mass ratio of L-lactide used was changed, and the dilution concentration during the synthesis was appropriately changed to a concentration that was easy to handle.

The obtained block copolymers (I-7) to (I-14) were subjected to the above measurement. The results are shown in Tables 1-2 to 1-4.

### [Production Example 15]

A block copolymer (I-15) composed of a block structural unit (A) having a polylactic acid unit (a) as a main unit and a block structural unit (B) having a polyester unit (b) as a main unit was synthesized in the same manner as in Production Example 1 except that the number average molecular weight was adjusted by adjusting the reaction time during the synthesis of the polymer composed of a structural unit (B') having a polyester unit (b) as a main unit, a mixture of L-lactide and D-lactide (L-lactide: D-lactide = 95:5 (mass ratio)) was used instead of L-lactide, and the dilution concentration during the synthesis was appropriately changed to a concentration that was easy to handle.

The obtained block copolymer (I-15) was subjected to the above measurement. The results are shown in Table 1-4.

### [Production Example 16]

A block copolymer (I-16) composed of a block structural unit (A) having a polylactic acid unit (a) as a main unit and a block structural unit (B) having a polyester unit (b) as a main unit was synthesized in the same manner as in Production Example 15 except that the number average molecular weight was adjusted by adjusting the reaction time during the synthesis of the polymer composed of a structural unit (B') having a polyester unit (b) as a main unit, the mass ratio of L-lactide and D-lactide used was set to 80:20, and the dilution concentration during the synthesis was appropriately changed to a concentration that was easy to handle.

The obtained block copolymer (I-16) was subjected to the above measurement. The results are shown in Table 1-4.

### [Comparative Production Example 1]

Into a flask equipped with a device capable of distilling off a generated liquid and a vacuum pump, propylene glycol and succinic acid were charged such that the molar ratio was propylene glycol/succinic acid = 1.1/1, tin octylate was further added so as to be 0.1% by mass with respect to the total weight of propylene glycol and succinic acid, and the mixture was subjected to 3 h of heating at 160°C and 3 h of heating at 220°C under a nitrogen gas atmosphere at normal pressure to perform a reaction while distilling off water. Next, the pressure was reduced to 2,000 Pa to perform a 3 h of reaction, and then the pressure was reduced to 80 Pa to perform a reaction while appropriately checking until the number average molecular weight reached 26,600, thereby synthesizing a polymer composed of a structural unit (C) having a polyester unit as a main component. After completion of the reaction, the pressure was returned to normal pressure, the temperature was cooled to 80°C, toluene was added to dilute the solid content concentration to 40% by mass, and then the toluene solution was charged into methanol in an amount twice the total amount of the solution. The supernatant was discarded, methanol in the same amount as the amount of the toluene solution charged was added again and washing was performed. The supernatant was discarded, and the collected insoluble content was dried at 40°C with a vacuum dryer to remove the organic volatile content, thereby obtaining a polyester-based polymer (C-1) composed of a structural unit (C) having a polyester unit as a main component.

### [Comparative Production Example 2]

A block copolymer (I'-1) was synthesized in the same manner as in Production Example 1 except that propylene glycol was used instead of 3-methyl-1,5-pentanediol, succinic acid was used instead of adipic acid, the number average molecular weight was adjusted by adjusting the reaction time during the synthesis of the polymer composed of the structural unit (C') having a polyester unit as a main unit, the mass ratio of L-lactide used was changed, and the dilution concentration during the synthesis was appropriately changed to a concentration that was easy to handle.

The obtained block copolymer (I'-1) was subjected to the above measurement. The results are shown in Table 2.

### [Examples 1 to 21 and Comparative Examples 2 and 3]

The block copolymer and polymer obtained in each of Production Examples and a polylactic acid-based polymer "INGEO 2500HP" (manufactured by NatureWorks, LLC.) as an aliphatic polyester-based polymer (II) were charged into a kneader Labo Plastomill (manufactured by Toyo Seiki Seisaku-sho, Ltd., product name "3S150", roller mixer type "R60") according to the formulations shown in Tables 1 and 2, and melt-kneaded at a cylinder temperature of 210°C and a screw rotation speed of 50 rpm for 5 minutes to obtain a resin composition. The obtained resin composition was subjected to the above measurement and evaluation. The results are shown in Tables 1-1 to 1-4 and 2.

### [Comparative Example 1]

A resin composition was obtained in the same manner as in Example 1 except that the block copolymer (I) was not used and the formulation of the aliphatic polyester-based resin (II) was changed to that shown in Table 2.

The obtained resin composition was subjected to the above measurement and evaluation. The results are shown in Table 2.

### [Table 1-1]

**Table 1-1**

| | | Example 1 | Example 2 | Example 3 | Example 4 | Example 5 | Example 6 |
|---|---|---|---|---|---|---|---|
| Block Copolymer (I) | Kind | Block Copolymer (I-1) | Block Copolymer (I-2) | Block Copolymer (I-3) | Block Copolymer (I-4) | Block Copolymer (I-5) | Block Copolymer (I-6) |
| | Structural Unit A-B-A | PLLA-MPD/AA-PLLA | PLLA-MPD/AA-PLLA | PLLA-MPD/SA-PLLA | PLLA-MPDiol/AA -PLLA | PLLA-MPDiol/SA-PLLA | PLLA-DEPD/AA-PLLA |
| | Mn of Block Structural Unit (B) | 9,500 | 26,600 | 26,600 | 26,600 | 26,600 | 26,600 |
| | Mn of Block Structural Unit | 19,000 | 38,000 | 38,000 | 38,000 | 38,000 | 38,000 |
| | Hard Ratio [% by Mass] | 50 | 30 | 30 | 30 | 30 | 30 |
| | D-body Ratio ^{*1} [% by Mass] | 0 | 0 | 0 | 0 | 0 | 0 |
| | Melting Point [°C] | 141 | 157 | 158 | 158 | 158 | 158 |
| | Glass Transition Temperature [°C] | -60 | -60 | -40 | -45 | -30 | -55 |
| | Formulation Amount [Parts by Mass] | 10 | 7 | 7 | 7 | 7 | 7 |
| Aliphatic Polyester-Based Resin (II) | Formulation Amount [Parts by Mass] | 90 | 93 | 93 | 93 | 93 | 93 |

| | | | | | | | |
|---|---|---|---|---|---|---|---|
| *1: Ratio of Structural Unit (D-body) Derived from D-lactic Acid in Structural Unit (A) | | | | | | | |

### [Table 1-1] Continued

**Table 1-1**

| | | Example 1 | Example 2 | Example 3 | Example 4 | Example 5 | Example 6 |
|---|---|---|---|---|---|---|---|
| Resin Composition | Content of Block Structural Unit (B) [% by Mass] | 5 | 5 | 5 | 5 | 5 | 5 |
| Measurement and Evaluation | Biodegradability (Compost) | A | A | A | A | A | A |
| | Impact Strength [kJ/m²] | 28 | 25 | 23 | 24 | 21 | 25 |
| | Haze [%] | 10 | 11 | 12 | 11 | 13 | 15 |
| | Glass Transition Temperature [°C] | 58 | 60 | 60 | 59 | 60 | 59 |
| | Deflection Temperature under Load [°C] | 63 | 68 | 68 | 68 | 68 | 67 |
| | Hydrolysis Resistance | A | A | A | A | A | A |

| | | | | | | | |
|---|---|---|---|---|---|---|---|
| *1: Ratio of Structural Unit (D-body) Derived from D-lactic Acid in Structural Unit (A) | | | | | | | |

### [Table 1-2]

**Table 1-2**

| | | Example 7 | Example 8 | Example 9 | Example 10 | Example 11 | Example 12 |
|---|---|---|---|---|---|---|---|
| Block Copolymer (I) | Kind | Block Copolymer (I-7) | Block Copolymer (I-8) | Block Copolymer (I-2) | Block Copolymer (I-2) | Block Copolymer (I-7) | Block Copolymer (I-8) |
| | Structural Unit A-B-A | PLLA-MPD/AA-PLLA | PLLA-MPD/AA-PLLA | PLLA-MPD/AA-PLLA | PLLA-MPD/AA-PLLA | PLLA-MPD/AA-PLLA | PLLA-MPD/AA-PLLA |
| | Mn of Block Structural Unit (B) | 32,500 | 27,300 | 26,600 | 26,600 | 32,500 | 27,300 |
| | Mn of Block Structural Unit | 46,400 | 42,000 | 38,000 | 38,000 | 46,400 | 42,000 |
| | Hard Ratio [% by Mass] | 30 | 35 | 30 | 30 | 30 | 35 |
| | D-body Ratio^{*1} [% by Mass] | 0 | 0 | 0 | 0 | 0 | 0 |
| | Melting Point [°C] | 154 | 152 | 157 | 157 | 154 | 152 |
| | Glass Transition Temperature [°C] | -61 | -59 | -60 | -60 | -61 | -59 |
| | Formulation Amount [Parts by Mass] | 3 | 5 | 10 | 15 | 28 | 45 |
| Aliphatic Polyester-Based Resin (II) | Formulation Amount [Parts by Mass] | 97 | 95 | 90 | 85 | 72 | 55 |
| Resin Composition | Content of Block Structural Unit (B) [% by Mass] | 2 | 3 | 7 | 10 | 19 | 29 |

| | | | | | | | |
|---|---|---|---|---|---|---|---|
| *1: Ratio of Structural Unit (D-body) Derived from D-lactic Acid in Structural Unit (A) | | | | | | | |

### [Table 1-2] Continued

**Table 1-2**

| | | Example 7 | Example 8 | Example 9 | Example 10 | Example 11 | Example 12 |
|---|---|---|---|---|---|---|---|
| Measurement and Evaluation | Biodegradability (Compost) | A | A | A | A | A | A |
| | Impact Strength [kJ/m²] | 13 | 16 | 26 | 28 | 24 | 13 |
| | Haze [%] | 3 | 5 | 15 | 32 | 62 | 68 |
| | Glass Transition Temperature [°C] | 60 | 60 | 60 | 59 | 59 | 59 |
| | Deflection Temperature under Load [°C] | 69 | 69 | 67 | 66 | 63 | 58 |
| | Hydrolysis Resistance | A | A | A | A | A | A |

| | | | | | | | |
|---|---|---|---|---|---|---|---|
| *1: Ratio of Structural Unit (D-body) Derived from D-lactic Acid in Structural Unit (A) | | | | | | | |

### [Table 1-3]

**Table 1-3**

| | | Example 13 | Example 14 | Example 15 | Example 16 | Example 17 | Example 18 |
|---|---|---|---|---|---|---|---|
| Block Copolymer (I) | Kind | Block Copolymer (I-9) | Block Copolymer (I-10) | Block Copolymer (I-11) | Block Copolymer (I-12) | Block Copolymer (I-8) | Block Copolymer (I-13) |
| | Structural Unit A-B-A | PLLA-MPD/AA-PLLA | PLLA-MPD/AA-PLLA | PLLA-MPD/AA-PLLA | PLLA-MPD/AA-PLLA | PLLA-MPD/AA-PLLA | PLLA-MPD/AA-PLLA |
| | Mn of Block Structural Unit (B) | 53,800 | 37,100 | 44,500 | 34,400 | 27,300 | 37,100 |
| | Mn of Block Structural Unit | 55,500 | 39,900 | 49,400 | 42,000 | 42,000 | 64,000 |
| | Hard Ratio [% by Mass] | 3 | 7 | 10 | 18 | 35 | 42 |
| | D-body Ratio ^{*1} [% by Mass] | 0 | 0 | 0 | 0 | 0 | 0 |
| | Melting Point [°C] | - | - | 145 | 147 | 152 | 165 |
| | Glass Transition Temperature [°C] | -60 | -59 | -59 | -59 | -59 | -61 |
| | Formulation Amount [Parts by Mass] | 5 | 5 | 6 | 6 | 8 | 9 |
| Aliphatic Polyester-Based Resin (II) | Formulation Amount [Parts by Mass] | 95 | 95 | 94 | 94 | 92 | 91 |
| Resin Composition | Content of Block Structural Unit (B) [% by Mass] | 5 | 5 | 5 | 5 | 5 | 5 |

| | | | | | | | |
|---|---|---|---|---|---|---|---|
| *1: Ratio of Structural Unit (D-body) Derived from D-lactic Acid in Structural Unit (A) | | | | | | | |

### [Table 1-3] Continued

**Table 1-3**

| | | Example 13 | Example 14 | Example 15 | Example 16 | Example 17 | Example 18 |
|---|---|---|---|---|---|---|---|
| Measurement and Evaluation | Biodegradability (Compost) | A | A | A | A | A | A |
| | Impact Strength [kJ/m²] | 29 | 32 | 27 | 25 | 27 | 17 |
| | Haze [%] | 21 | 23 | 17 | 25 | 9 | 4 |
| | Glass Transition Temperature [°C] | 60 | 60 | 60 | 61 | 60 | 59 |
| | Deflection Temperature under Load [°C] | 69 | 69 | 69 | 67 | 67 | 69 |
| | Hydrolysis Resistance | A | A | A | A | A | A |

| | | | | | | | |
|---|---|---|---|---|---|---|---|
| *1: Ratio of Structural Unit (D-body) Derived from D-lactic Acid in Structural Unit (A) | | | | | | | |

### [Table 1-4]

**Table 1-4**

| | | Example 19 | Example 20 | Example 21 |
|---|---|---|---|---|
| Block Copolymer (I) | Kind | Block Copolymer (I-14) | Block Copolymer (I-15) | Block Copolymer (I-16) |
| | Structural Unit A-B-A | PLLA-MPD/AA-PLLA | PDLLA-MPD/AA-PDLLA | PDLLA-MPD/AA-PDLLA |
| | Mn of Block Structural Unit (B) | 21,500 | 34,800 | 34,100 |
| | Mn of Block Structural Unit | 43,000 | 59,000 | 40,100 |
| | Hard Ratio [% by Mass] | 50 | 41 | 15 |
| | D-body Ratio ^{*1} [% by Mass] | 0 | 5 | 20 |
| | Melting Point [°C] | 163 | 147 | - |
| | Glass Transition Temperature [°C] | -60 | -59 | -57 |
| | Formulation Amount [Parts by Mass] | 10 | 9 | 6 |
| Aliphatic Polyester-Based Resin (II) | Formulation Amount [Parts by Mass] | 90 | 91 | 94 |
| Resin Composition | Content of Block Structural Unit (B) [% by Mass] | 5 | 5 | 5 |
| Measurement and Evaluation | Biodegradability (Compost) | A | A | A |
| | Impact Strength [kJ/m²] | 11 | 18 | 28 |
| | Haze [%] | 6 | 4 | 16 |
| | Glass Transition Temperature [°C] | 60 | 60 | 59 |
| | Deflection Temperature under Load [°C] | 67 | 67 | 69 |
| | Hydrolysis Resistance | A | A | A |

| | | | | |
|---|---|---|---|---|
| *1: Ratio of Structural Unit (D-body) Derived from D-lactic Acid in Structural Unit (A) | | | | |

### [Table 2]

**Table 2**

| | | Comparative Example 1 | Comparative Example 2 | Comparative Example 3 |
|---|---|---|---|---|
| Block Copolymer (I) | Kind | - | - | Block Copolymer (I'-1) |
| | Structural Unit A-C-A | - | - | PLLA-PG/SA-PLLA |
| | Mn of Block Structural Unit (C) | - | - | 26,600 |
| | Mn of Block Structural Unit | - | - | 38,000 |
| | Hard Ratio [% by Mass] | - | - | 30 |
| | Melting Point [°C] | - | - | 158 |
| | Glass Transition Temperature [°C] | - | - | -5 |
| | Formulation Amount [Parts by Mass] | - | - | 7 |
| Polyester-Based Polymer | Kind | - | Polyester-Based Polymer (C-1) | - |
| | Structural Unit C | - | PG/SA | - |
| | Mn of Polymer | - | 26,600 | - |
| | Formulation Amount [Parts by Mass] | - | 5 | - |
| Aliphatic Polyester-Based Resin (II) | Formulation Amount [Parts by Mass] | 100 | 95 | 93 |
| Resin Composition | Content of Block Structural Unit (C) [% by Mass] | 0 | 5 | 5 |
| Measurement and Evaluation | Biodegradability (Compost) | A | A | A |
| | Impact Strength [kJ/m²] | 11 | 17 | 18 |
| | Haze [%] | 1 | 32 | 13 |
| | Glass Transition Temperature [°C] | 61 | 59 | 60 |
| | Deflection Temperature under Load [°C] | 69 | 66 | 67 |
| | Hydrolysis Resistance | A | B | B |

The compounds represented by the abbreviations in Tables 1 and 2 are as follows.
PLLA: poly-L-lactic acid
PDLLA: poly-DL-lactic acid
MPD: 3-methyl-1,5-pentanediol
DEPD: 2,4-diethyl-1,5-pentanediol
MPDiol: 2-methyl-1,3-propanediol
AA: adipic acid
SA: succinic acid
PG: propylene glycol

As shown in Examples in Table 1, it was confirmed from the evaluation of the hydrolysis resistance that the resin composition of the present embodiment including the block copolymer (I) containing the block structural unit (A) having the polylactic acid unit (a) as a main component and the block structural unit (B) having the polyester unit (b) with a specific structure as a main component, and the aliphatic polyester-based resin (II) has excellent hydrolysis resistance. In addition, it was also confirmed that the resin composition of the present embodiment has excellent impact resistance from the measurement of impact strength and has excellent heat resistance from the measurement of deflection temperature under load. Furthermore, it was confirmed that the resin composition of the present embodiment is also excellent in biodegradability and transparency. In addition, from the above results, it can be said that the block copolymer (I) containing the block structural unit (A) having the polylactic acid unit (a) as a main component and the block structural unit (B) having the polyester unit (b) with a specific structure as a main component is suitable for use as a resin modifying agent.

On the other hand, since the resin composition obtained in Comparative Example 1 did not include the block copolymer (I), the impact resistance was poor.

Further, the resin composition obtained in Comparative Example 2 was inferior in hydrolysis resistance, impact resistance, and transparency. It is considered that the reason for this result is because a polyester-based polymer obtained by reacting propylene glycol and succinic acid was used, instead of the block copolymer.

Further, the resin composition obtained in Comparative Example 3 was inferior in hydrolysis resistance and impact resistance as in Comparative Example 2. It is considered that the reason for this result is because the block copolymer contains, as a structural unit, propylene glycol in which the two hydroxy groups in the diol are not primary hydroxy groups.

As shown in the results of the above Examples, the resin composition of the present embodiment is excellent in biodegradability, hydrolysis resistance, impact resistance, and heat resistance. In addition, the block copolymer (I) is suitable for use as a resin modifying agent. Therefore, the industrial usability of the resin composition and the resin modifying agent of the present embodiment is extremely high.

## Claims

1. A resin composition comprising a block copolymer (I) and an aliphatic polyester-based resin (II),
wherein the block copolymer (I) contains a block structural unit (A) having a polylactic acid unit (a) as a main component and a block structural unit (B) having a polyester unit (b) as a main component;
the polyester unit (b) contains a unit derived from an aliphatic diol (b1) and an aliphatic dicarboxylic acid (b2);
the aliphatic diol (b1) has an alkyl group as a branched chain and does not have a quaternary carbon atom;
two hydroxy groups in the aliphatic diol (b1) are primary hydroxy groups; and
the block copolymer (I) has a melting point of lower than 180°C.

2. The resin composition according to Claim 1, wherein the aliphatic polyester-based resin (II) is at least one selected from the group consisting of a biomass resin and a biodegradable resin.

3. The resin composition according to Claim 1 or 2, wherein the aliphatic polyester-based resin (II) is a polylactic acid-based resin.

4. The resin composition according to Claim 1, wherein the aliphatic diol (b1) has 4 or more carbon atoms.

5. The resin composition according to Claim 1, wherein the aliphatic diol (b1) has 6 or more carbon atoms.

6. The resin composition according to any one of Claim 1, 4, and 5, wherein the aliphatic diol (b1) has 30 or less carbon atoms.

7. The resin composition according to Claim 1, wherein the branched chain is a methyl group.

8. The resin composition according to Claim 1, wherein the aliphatic diol (b1) is 3-methyl-1,5-pentanediol.

9. The resin composition according to Claim 1, wherein the aliphatic dicarboxylic acid (b2) has 4 to 12 carbon atoms.

10. The resin composition according to Claim 1, wherein the aliphatic dicarboxylic acid (b2) is an acyclic aliphatic dicarboxylic acid.

11. The resin composition according to Claim 1, wherein the block copolymer (I) has a glass transition point of -80°C or higher and -15°C or lower.

12. The resin composition according to Claim 1, wherein the block copolymer (I) has a glass transition point of -80°C or higher and -45°C or lower.

13. The resin composition according to Claim 1, wherein the block copolymer (I) has a melting point of 110°C or higher.

14. The resin composition according to Claim 1, wherein the block copolymer (I) has a number average molecular weight of 20,000 to 400,000.

15. The resin composition according to Claim 1, wherein the block structural unit (B) has a number average molecular weight of 10,000 to 300,000.

16. The resin composition according to Claim 1, wherein the block structural unit (A) contains a structural unit derived from poly-L-lactic acid or a structural unit derived from poly-D-lactic acid.

17. The resin composition according to Claim 1, wherein the block structural unit (A) is 5% by mass or more and 95% by mass or less with respect to 100% by mass of a total of the block structural unit (A) and the block structural unit (B).

18. A resin modifying agent comprising a block copolymer (I) containing a block structural unit (A) having a polylactic acid unit (a) as a main component and a block structural unit (B) having a polyester unit (b) as a main component,
wherein the polyester unit (b) contains a unit derived from an aliphatic diol (b1) and an aliphatic dicarboxylic acid (b2);
the aliphatic diol (b1) has an alkyl group as a branched chain and does not have a quaternary carbon atom; and
two hydroxy groups in the aliphatic diol (b1) are primary hydroxy groups.
